# EUROPEAN PATENT APPLICATION

(11) **EP 3 913 945 A1**
(43) Date of publication of application: **24.11.2021**
(21) Application number: 21159029.4
(22) Date of filing: 24.02.2021
(51) Int. Cl.: H04W 8/18

(54) **DATA SWITCHING METHOD, DATA SWITCHING APPARATUS AND STORAGE MEDIUM**

(30) Priority: 21.05.2020 CN 202010433808
(71) Applicant: Beijing Xiaomi Mobile Software Co., Ltd., Beijing 100085 (CN)
(72) Inventor: GAO, YI, Beijing, Beijing 100085 (CN)
(74) Representative: dompatent von Kreisler Selting Werner - Partnerschaft von Patent- und Rechtsanwälten mbB

(57) **Abstract**

A data switching method, applied to a terminal on which multiple SIM cards for user identification are installed, includes: monitoring network statuses of the multiple SIM cards, and determining that there is a SIM card satisfying a combination of dual standby and dual active network statuses among the multiple SIM cards based on the network statuses; establishing data connection for the SIM card satisfying the combination of dual standby and dual active network statuses in response to determining that there is the SIM card satisfying the combination of dual standby and dual active network statuses among the multiple SIM cards based on the network statuses; and disconnecting routing connection of a SIM card that currently establishes routing connection, and switching to a SIM card that has established data connection to establish routing connection in response to a need to switch the SIM card that currently establishes the routing connection.

## Description

### BACKGROUND

In an environment where network data are used, a terminal needs to establish, based on a Subscriber Identity Module (SIM) card selected by users, a data connection and route corresponding to the SIM card selected by the users. When it is needed to use the network data of the SIM card, the command to open the network data connection is triggered based on the terminal operation interface.

### SUMMARY

The present disclosure relates generally to the field of 5G networks, and more specifically, to a data switching method, apparatus and a storage medium.

According to a first aspect of the present disclosure, there is provided a data switching method, applied to a terminal on which multiple SIM cards for user identification are installed, including:
monitoring network statuses of the multiple SIM cards, and determining that there is a SIM card satisfying a combination of dual standby and dual active network statuses among the multiple SIM cards based on the network statuses; establishing a data connection for the SIM card satisfying the combination of dual standby and dual active network statuses in response to the determining that there is the SIM card satisfying the combination of dual standby and dual active network statuses among the multiple SIM cards based on the network statuses; and disconnecting a routing connection of a SIM card that currently establishes a routing connection, and switching to a SIM card that has established a data connection to establish a routing connection in response to a need to switch the SIM card that currently establishes the routing connection.

In some embodiments, the SIM cards satisfying the combination of dual standby and dual active network statuses include a first SIM card and a second SIM card, and the first SIM card is a SIM card that has established a data connection and a routing connection and performs a service, and the second SIM card is a SIM card that is different from the first SIM card and does not establish the data connection and the routing connection among the SIM cards satisfying the combination of dual standby and dual active network statuses;
the establishing the data connection for the SIM card satisfying a combination of dual standby and dual active network statuses includes:
maintaining the data connection and the routing connection of the first SIM card, and establishing the data connection of the second SIM card.

In some embodiments, the method further includes:
monitoring and recording a network data signal quality level of each of the multiple SIM cards, the network data signal quality level including a strong signal quality level and a weak signal quality level; the network data signal quality of the strong signal quality level is higher than a first predetermined value, and the network data signal quality of the weak signal quality level is lower than the first predetermined value; wherein, if a level of the network data signal quality of the SIM card that currently establishes the routing connection is a weak signal quality level, it is determined that the SIM card that currently establishes the routing connection needs to be switched.

In some embodiments, the method further includes:
monitoring services performed by the second SIM card; and determining that a current routing connection needs to be switched from the first SIM card to the second SIM card in response to monitoring that the second SIM card performs a specific service.

In some embodiments, the establishing the data connection for the SIM card satisfying the combination of dual standby and dual active network statuses includes:
establishing a data connection carrying SIM card information for each of the SIM cards satisfying the combination of dual standby and dual active network statuses.

In some embodiments, the method further includes:
disconnecting a data connection of a SIM card that does not establish a route and has established the data connection if the network status of the SIM card that has established the data connection no longer satisfies the combination of dual standby and dual active network statuses after establishing the data connection for the SIM card satisfying the combination of dual standby and dual active network statuses.

According to a second aspect of the present disclosure, there is provided a data switching apparatus, which is applied to a terminal on which multiple SIM cards for user identification are installed, including:
a network monitoring component configured to monitor network statuses of the multiple SIM cards, and determine that there is a SIM card satisfying a combination of dual standby and dual active network statuses among the multiple SIM cards based on the network statuses; and a network establishing component configured to establish a data connection for the SIM card satisfying the combination of dual standby and dual active network statuses in response to determining that there is the SIM card satisfying the combination of dual standby and dual active network statuses among the multiple SIM cards based on the network statuses; and disconnect a routing connection of a SIM card that currently establishes a routing connection, and switch to a SIM card that has established a data connection to establish a routing connection in response to a need to switch the SIM card that currently establishes the routing connection.

In some embodiments, the SIM cards satisfying the combination of dual standby and dual active network statuses include a first SIM card and a second SIM card, and the first SIM card is a SIM card that has established a data connection and a routing connection and performs a service, and the second SIM card is a SIM card that is different from the first SIM card and does not establish the data connection and the routing connection among the SIM cards satisfying the combination of dual standby and dual active network statuses;
the network establishing component is configured to maintain the data connection and the routing connection of the first SIM card, and establish the data connection of the second SIM card.

In some embodiments, the apparatus further includes: a network quality monitoring component;
the network quality monitoring component is configured to: monitor and record a network data signal quality level of each of the multiple SIM cards, the network data signal quality level including a strong signal quality level and a weak signal quality level; the network data signal quality of the strong signal quality level is higher than a first predetermined value, and the network data signal quality of the weak signal quality level is lower than the first predetermined value; wherein, if a level of the network data signal quality of the SIM card that currently establishes the routing connection is a weak signal quality level, it is determined that the SIM card that currently establishes the routing connection needs to be switched.

In some embodiments, the apparatus further includes: a specific service monitoring component;
the specific service monitoring component is configured to: monitor services performed by the second SIM card; and determine that a current routing connection needs to be switched from the first SIM card to the second SIM card in response to monitoring that the second SIM card performs a specific service.

In some embodiments, the network establishing component is configured to:
establish a data connection carrying SIM card information for each of the SIM cards satisfying a combination of dual standby and dual active network statuses.

In some embodiments, the network establishing component is further configured to:
disconnect a data connection of a SIM card that does not establish a route and has established the data connection if the network status of the SIM card that has established the data connection no longer satisfies the combination of dual standby and dual active network statuses after the data connection is established for the SIM card satisfying the combination of dual standby and dual active network statuses.

According to a third aspect of the present disclosure, there is provided a network mode adjusting apparatus, including:
a processor; and a storage for storing instructions executable by the processor, wherein, the processor is configured to: execute the data switching method according to the first aspect or any one of the implementations of the first aspect.

According to a fourth aspect of the present disclosure, there is provided a non-transitory computer-readable storage medium having stored therein instructions that, when executed by a processor of a network device, causes an electronic device to execute the data switching method according to execute the data switching method according to the first aspect or any one of the implementations of the first aspect.

It is to be understood that both the foregoing general description and the following detailed description are exemplary and explanatory only and are not restrictive of the disclosure.

### BRIEF DESCRIPTION OF THE DRAWINGS

The accompanying drawings, which are incorporated in and constitute a part of this disclosure, illustrate embodiments consistent with the present disclosure and, together with the description, serve to explain the principles of the present disclosure.
FIG. 1 is a flowchart illustrating a data switching method according to some embodiments.
FIG. 2 is a flowchart illustrating another data switching method according to some embodiments.
FIG. 3 is a block diagram illustrating a data switching apparatus according to some embodiments.
FIG. 4 is a block diagram illustrating another data switching apparatus according to some embodiments.
FIG. 5 is a block diagram illustrating another data switching apparatus according to some embodiments.
FIG. 6 is a block diagram illustrating a device according to some embodiments.

### DETAILED DESCRIPTION

Description will now be made in detail to exemplary embodiments, examples of which are illustrated in the accompanying drawings. The following description refers to the accompanying drawings in which the same numbers in different drawings represent the same or similar elements unless otherwise indicated. The implementations set forth in the following exemplary embodiments do not represent all implementations consistent with the present disclosure. Instead, they are merely examples of devices and methods consistent with aspects related to the present disclosure as recited in the appended claims.

In the 5G network environment, there are multiple SIM cards especially in the terminal. If the user needs to switch the SIM card that uses the network data, in the related technologies, the user can only switch the network data of the SIM card through the operation of the user on the terminal display interface. In related technologies, for the implementation of the network data switching of the SIM card, the steps are complicated and the efficiency is low, and the continuity of the network data cannot be guaranteed.

In some embodiments of the present disclosure, for convenience of description, a New Radio (NR) network mode is referred to as a 5G network resident mode, and a Long-Term Evolution (LTE) network mode is referred to as a 4G network resident mode.

In related technologies, 5G network networking manners include two networking manners: Non-Stand Alone (NSA) and Stand Alone (SA), and many 5G terminals need to support the two networking manners at the same time, such that the terminal hardware adds multiple antennas. In this case, the 5G terminals to which the multiple antennas are added can support dual SIM dual active (DSDA) network status, that is, two SIM cards are on standby at the same time, and the signals from two communication networks are switched on at the same time. Herein, the scenario of realizing dual standby and dual active network status is as follows: there are two SIM cards, one of which (hereinafter referred to as a first SIM card) resides in the SA network manner in the 5G network, and the other (hereinafter referred to as a second SIM card) resides in the 4G network.

In related technologies, when multiple SIM cards are installed on the terminal, after the user opens the data network connection, the terminal operating system may establish the data connection and route of the first SIM card, and the first SIM card is used as a data card. If the user needs to switch the data connection to another SIM card different from the first SIM card as a data card, it is necessary to operate based on the terminal operation interface, and the terminal operating system disconnects the current data connection of the first SIM card firstly. Secondly, it will be determined that the other SIM card different from the first SIM card needs to be set as a data card, and then a data connection and a corresponding route are established for the other SIM card different from the first SIM card. Therefore, the data connection is interrupted within a period of time, and the data switching time is long, thereby the efficiency is low.

Various embodiments of the present disclosure provide a data switching method for the 5G network environment, which can solve some or all of the above problems. In the 5G network environment, the terminal establishes a data connection in the dual standby and dual active network status for the first SIM card and the second SIM card in the dual SIM dual active network status among the multiple SIM cards. It should be understood that the first SIM card in the dual standby and dual active network status is a main data card which has established a data connection and a corresponding route, and the second SIM card only establishes a data connection without establishing a route. If the second SIM card needs to be used as a data card, it can be implemented by disconnecting the route of the first SIM card and establishing the route of the second SIM card.

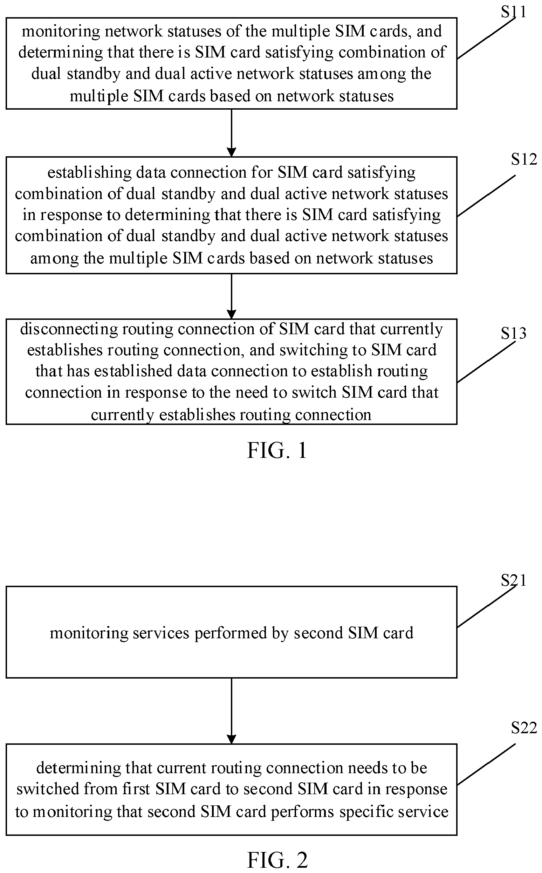

FIG. 1 is a flowchart illustrating a data switching method according to some embodiments, and as shown in FIG. 1, the data switching method is applied in a terminal on which multiple SIM cards are installed, and includes the following steps.

In step S11, network statuses of the multiple SIM cards are monitored, and it is determined that there is a SIM card satisfying a combination of dual standby and dual active network statuses among the multiple SIM cards based on the network statuses.

In some embodiments of the present disclosure, after the SIM cards are installed on the terminal, the network status of each SIM card is monitored, and the network type corresponding to the network status of each SIM card is marked. Herein, the network types include: SA network, NSA network, LTE network, and networks below LTE (2G network, 3G network, etc.). For example, if the network status of the SIM card is the SA network, the network type of the SIM card is correspondingly marked as the SA network.

In some embodiments, two SIM cards that can satisfy dual standby and dual active network status requirements are determined among the multiple SIM cards, based on the network status of each SIM card and the dual standby and dual active network status requirements. In the present disclosure, for convenience of description, the two SIM cards satisfying the dual standby and dual active network status requirements are referred to as a first SIM card and a second SIM card. Herein, the satisfying the dual standby and dual active network status requirements can be understood as that the first SIM card resides in the 5G network, and the second SIM card resides in the 4G network.

In step S12, a data connection for the SIM card satisfying the combination of dual standby and dual active network statuses is established in response to the determining that there is the SIM card satisfying the combination of dual standby and dual active network statuses among the multiple SIM cards based on the network statuses.

In some embodiments of the present disclosure, whether the current SIM card combination satisfies the dual standby and dual active network status requirements is marked. For example, if the first SIM card is an SA network, and the second SIM card is an LTE network, it is marked that the first SIM card and the second SIM card satisfy the dual standby and dual active network status requirements. If the first SIM card is an LTE network, and the second SIM card is an SA network, it is marked that the first SIM card and the second SIM card satisfy the dual standby and dual active network status requirements. If the first SIM card is an SA network, and the second SIM card is an NSA network, it is marked that the first SIM card and the second SIM card do not satisfy the dual standby and dual active network status requirements. If the first SIM card is an NSA network, and the second SIM card is an SA network, it is marked that the first SIM card and the second SIM card do not satisfy the dual standby and dual active network status requirements. If the first SIM card is an NSA network, and the second SIM card is an NSA network, it is marked that the first SIM card and the second SIM card do not satisfy the dual standby and dual active network status requirements. If the first SIM card is an LTE network, and the second SIM card is an LTE network, it is marked that the first SIM card and the second SIM card do not satisfy the dual standby and dual active network status requirements.

The process of establishing a data connection between the first SIM card and the second SIM card satisfying the dual standby and dual active network status requirements can be described in conjunction with the following embodiments.

In some embodiments, a request to establish a data connection between the first SIM card and the second SIM card is initiated by a framework layer of the terminal, and a connection between a modulator-demodulator (Modem) and the network is established by a radio interface layer (RIL) of the terminal when receiving the request to establish a data connection between the first SIM card and the second SIM card initiated by the framework layer, Modem can be understood as the abbreviation of Modulator (modulator) and Demodulator (demodulator). After a connection is successfully established between the Modem and the network, a message indicating that the Modem establishes a connection with the network successfully is returned to the framework layer, and the framework layer obtains the information of each SIM card. The route of the first SIM card is established according to the information of the SIM card.

In step S13, a routing connection of a SIM card that currently establishes a routing connection is disconnected, and it is switched to a SIM card that has established a data connection to establish a routing connection, in response to the need to switch the SIM card that currently establishes the routing connection.

In some embodiments of the present disclosure, on one hand, the need to switch the SIM card that currently establishes the routing connection may be because the user needs to switch the first SIM card that uses the network data. On the other hand, it may be because the network data signal quality of the first SIM card that currently establishes a route is poor (below the predetermined signal quality threshold). When it is determined that there is a need to switch the SIM card that currently establishes a routing connection, the route of the first SIM card currently connected to the network data is disconnected, the route of the second SIM card is established, and the network data is automatically switched to the network data of the second SIM card.

In the data switching method according to the above embodiments, based on the established data connection in the dual standby dual active network status, the routes of the first SIM card and the second SIM card can be switched freely, which reduces the time for establishing a data connection when switching the network data, and improves the switching efficiency of the network data.

The process of pre-establishing a data connection to implement data switching can be described in conjunction with the following embodiments.

In some embodiments of the present disclosure, the first SIM card is a SIM card that has established a data connection and a routing connection and performs a service, and the second SIM card is a SIM card that satisfies a combination of dual standby and dual active network statuses and does not establish the data connection and the routing connection after being combined with the first SIM card. It is realized, through the present disclosure, that the data connection of the second SIM card is established in the case that the original data connection and routing connection of the first SIM card are maintained.

In some embodiments, the terminal receives the real-time network data signal quality of each of the multiple SIM cards sent by the system underlay network, and monitors the network data quality of each SIM card in real time by monitoring the interface of the operating system. Herein, the system underlay network can also send the network data quality of the SIM card of the current data connection to other applications.

In some embodiments of the present disclosure, a network data quality threshold is set. If the received network data quality corresponding to the SIM card is higher than the set threshold, the network data quality of the corresponding SIM card is marked as a strong signal quality level. In some embodiments, if the received network data quality corresponding to the SIM card is lower than the set threshold, the network data quality of the corresponding SIM card is marked as a weak signal quality level.

In some embodiments of the present disclosure, if the network data quality of the first SIM card currently using the network data is marked as the weak signal quality level, it is determined to switch the network data, disconnect the route of the first SIM card currently using the network data, and establish the route of the second SIM card.

FIG. 2 is a flowchart illustrating a data switching method according to some embodiments, and as shown in FIG. 2, the data switching method includes a step S21 and a step S22.

In step S21, services performed by the second SIM card are monitored.

In some embodiments of the present disclosure, the terminal monitors the execution service of the SIM card through the system operation interface, and if it is received that the service performed by the second SIM card is a specific service, an operation to switch the network data is triggered. Herein, the specific services include: making calls, answering calls, and other service activities.

In an example, the making calls, answering calls, and other service activities can be understood as voice calls triggered by dialing and the like and performed based on a SIM card.

In step S22, it is determined that the current routing connection needs to be switched from the first SIM card to the second SIM card in response to monitoring that the second SIM card performs a specific service.

In some embodiments of the present disclosure, if it is monitored that the second SIM card performs a specific service, the route of the first SIM card is disconnected, the connection is switched to the route of the second SIM card, and the connection of the route of the second SIM card is established. When it is monitored that the specific service of the second SIM card ends, the routing connection of the second SIM card is disconnected, the connection is switched back to the route of the first SIM card, and the route of the first SIM card is established. It can be understood that, in some embodiments of the present disclosure, only the routing connection of the first SIM card or the second SIM card is disconnected here, and the data connection of the first SIM card and the second SIM card will not be disconnected.

In an example of the present disclosure, the terminal obtains the information of each SIM card according to the data connection request, and establishes a data connection between the corresponding modem and the network based on the information of each SIM card. Herein, after the Modem establishes a connection with the network successfully, the information of the current first SIM card is obtained, the route of the first SIM card is established, and the network data connection is completed. At this time, the terminal uses the network data of the first SIM card. After the second SIM card successfully establishes the data connection, the operation to establish a route is stopped, and when it is necessary to switch to the route of the second SIM card, the route of the first SIM card is disconnected, and the route of the second SIM card is established.

In the data switching method involved the above embodiments, when a data connection is established, the corresponding SIM card information is carried, and when the Modem is connected with the network, the SIM card information is automatically distinguished.

In some embodiments of the present disclosure, if it is monitored that after a data connection is established based on the SIM card that satisfies a combination of dual standby and dual active network statuses, the SIM card no longer satisfies the dual standby and dual active network status requirements, the operation of disconnecting the data connection of the SIM card that does not establish a route and has established a data connection, that is, the data connection of the second SIM card, is triggered.

In the data switching method provided by the embodiments of the present disclosure, the first SIM card and the second SIM card that satisfy the combination of dual standby and dual active network statuses are determined, and a data connection for the first SIM card and the second SIM card is established according to the network statuses of the multiple SIM cards. When the SIM card is switched, the route of the first SIM card that has established a data connection is disconnected, and the route of the second SIM card is established without establishing the data connection of the second SIM card during switching the SIM card, which saves the time of establishing a data connection, and the operation is simple and fast.

Based on a similar concept, the embodiments of the present disclosure also provide a data switching apparatus.

It can be understood that, in order to implement the above functions, the data switching apparatus provided by the embodiments of the present disclosure includes a corresponding hardware structure and/or software module for executing each function. With reference to the components and algorithm steps of the examples disclosed in some embodiments of the present disclosure, the embodiments of the present disclosure can be implemented in the form of hardware or a combination of hardware and computer software. Whether a function is executed by the hardware or a method that the computer software drives the hardware depends on the specific application and design constraints of the technical solution. A person skilled in the art may use different methods to implement the described functions for each specific application, but such implementation should not be considered as going beyond the scope of the technical solutions of the embodiments of the present disclosure.

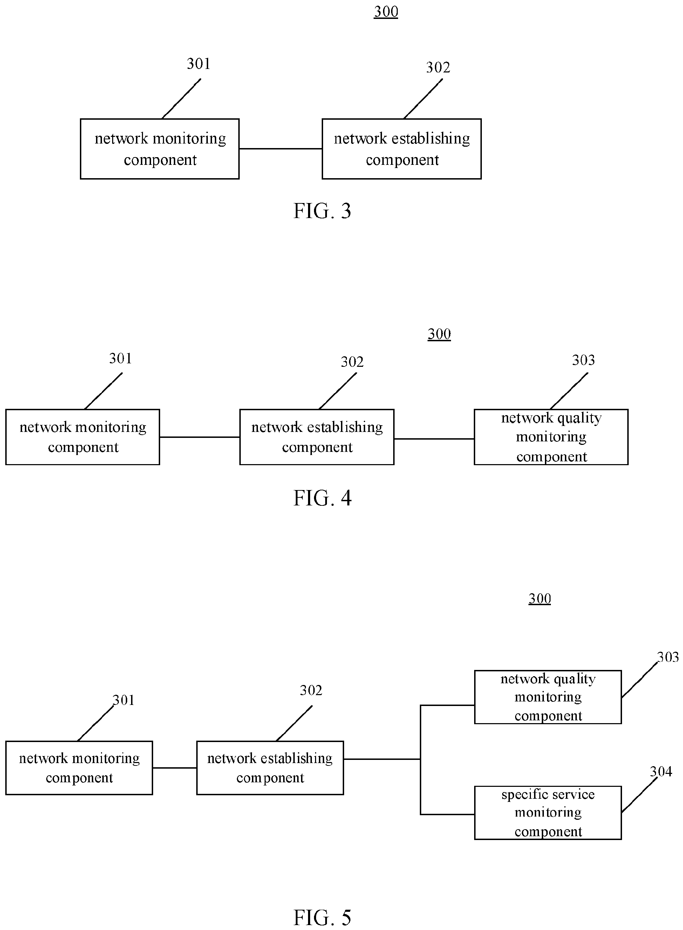

FIG. 3 is a block diagram illustrating a data switching apparatus 300 according to some embodiments. Referring to FIG. 3, the data switching apparatus 300 includes a network monitoring component 301 and a network establishing component 302.

The network monitoring component 301 is configured to monitor network statuses of multiple SIM cards, and determine that there is a SIM card satisfying a combination of dual standby and dual active network statuses among the multiple SIM cards based on the network statuses. The network establishing component 302 is configured to establish a data connection for the SIM card satisfying the combination of dual standby and dual active network statuses in response to determining that there is the SIM card satisfying the combination of dual standby and dual active network statuses among the multiple SIM cards based on the network statuses; and disconnect a routing connection of a SIM card that currently establishes a routing connection, and switch to a SIM card that has established a data connection to establish a routing connection in response to a need to switch the SIM card that currently establishes the routing connection.

In some embodiments, the SIM cards satisfying the combination of dual standby and dual active network statuses include a first SIM card and a second SIM card, and the first SIM card is a SIM card that has established a data connection and a routing connection and performs a service, and the second SIM card is a SIM card that is different from the first SIM card and does not establish the data connection and the routing connection among the SIM cards satisfying the combination of dual standby and dual active network statuses.

The network establishing component 302 is configured to maintain the data connection and the routing connection of the first SIM card, and establish the data connection of the second SIM card.

In some embodiments, FIG. 4 is a block diagram illustrating a data switching apparatus 300 according to some embodiments. Referring to FIG. 4, the data switching apparatus 300 further includes: a network quality monitoring component 303.

The network quality monitoring component 303 is configured to monitor and record a network data signal quality level of each of the multiple SIM cards, and the network data signal quality level includes a strong signal quality level and a weak signal quality level. The network data signal quality of the strong signal quality level is higher than a first predetermined value, and the network data signal quality of the weak signal quality level is lower than the first predetermined value. Herein, if a level of the network data signal quality of the SIM card that currently establishes the routing connection is a weak signal quality level, it is determined that the SIM card that currently establishes the routing connection needs to be switched.

In some embodiments, FIG. 5 is a block diagram illustrating a data switching apparatus 300 according to some embodiments. Referring to FIG. 5, the data switching apparatus 300 further includes: a specific service monitoring component 304.

The specific service monitoring component 304 is configured to monitor services performed by the second SIM card. In response to monitoring that the second SIM card performs a specific service, it is determined that the current routing connection needs to be switched from the first SIM card to the second SIM card.

In some embodiments, the network establishing component 302 is configured to establish a data connection carrying SIM card information for each of the SIM cards that satisfy a combination of dual standby and dual active network statuses.

In some embodiments, the network establishing component 302 is further configured to disconnect a data connection of a SIM card that does not establish a route and has established the data connection if the network status of the SIM card that has established the data connection no longer satisfies the combination of dual standby and dual active network statuses after the data connection is established for the SIM card that satisfies the combination of dual standby and dual active network statuses.

With respect to the apparatus in the above embodiments, the specific modes for performing operations by individual modules therein have been described in detail in the embodiments regarding the methods, which will not be elaborated here.

The process of realizing data switching for the data switching apparatus can be described in conjunction with the following embodiments.

In some embodiments of the present disclosure, the network monitoring component 301 receives the network status of the terminal operating system after the SIM card is inserted, and there are two network forms for 5G networks: SA networking and NSA networking.

When the terminal device resides in the SA network, it can be monitored by the network monitoring component 301 that the terminal device has resided in the SA network.

When the terminal device resides in the NSA network, it can be monitored by the network monitoring component 301 that the terminal device has resided in the NSA network.

When the terminal device resides in the LTE network, it can be monitored by the network monitoring component 301 that the terminal device has resided in the LTE network.

When the terminal device resides in the network below LTE, it can be monitored by the network monitoring component 301 that the terminal device has resided in the network below LTE.

After monitoring that it is resided in network, the network monitoring component 301 marks the current network type as: SA, or NSA, or LTE, or a network below LTE.

In an example, when two SIM cards are inserted into the terminal, the network monitoring component 301 monitors the network status of each SIM card respectively, records them respectively, and marks whether the current resident network combination satisfies the DSDA network requirements at the same time, which is shown in Table 1.

**Table 1**

| SIM card 1 | SIM card 2 | Whether to satisfy DSDA |
|---|---|---|
| NR | LTE | Satisfying |
| LTE | NR | Satisfying |
| NR | NSA | Not Satisfying |
| NSA | NR | Not Satisfying |
| NSA | NSA | Not Satisfying |
| LTE | LTE | Not Satisfying |
| ... | ... | ... |

In some embodiments of the present disclosure, the network quality monitoring component 303 receives the real-time network signal quality of each SIM card reported by the system underlay network module by monitoring the interfaces of the operating system.

For the above interfaces, the operating system will provide such interfaces for notifying each APP and each module in the system of the network quality of the current SIM card.

When monitoring the network signal quality, the network quality monitoring component 303 will record the signal quality corresponding to each SIM card, and if the signal quality becomes worse, it is recorded as "weak signal quality level". If the signal quality becomes better, it will be recorded as "strong signal quality level".

In some embodiments of the present disclosure, the specific service monitoring component 304 monitors whether the SIM card performs a specific service. For example, it is monitored whether the second SIM card (non-data card) has a call service being performed, the call service including outgoing calls, receiving calls, and the like.

In some embodiments of the present disclosure, the network establishing component 302 controls the SIM card to establish a data connection, and the entire flow includes the following steps.
(1) The framework layer initiates a data connection request.
(2) The RIL layer receives the request.
(3) The Modem establishes a connection with the network.
(4) The establishment is succeeded and the result is returned.
(5) The framework layer obtains network card information.
(6) The network control module establishes a corresponding route.
(7) The network link is successfully established and data traffic can be used.

In some embodiments of the present disclosure, the network establishing component 302 may establish corresponding data connections for different SIM cards. Here, when a data connection request is initiated, the SIM card information is carried, and when the underlay modem establishes a connection with the network, different SIM card information will be distinguished.

In some embodiments of the present disclosure, the network establishing component 302 controls different SIM cards to establish the data connections and the routing processes. Herein, the multiple SIM cards can establish data connections at the same time, but cannot establish routes at the same time. For example, the first SIM card establishes a data connection, and the second SIM card also establishes a data connection, but the first SIM card and the second SIM card cannot simultaneously establish routes for two mobile data networks.

In some embodiments of the present disclosure, when monitoring that the resident network combination of the first SIM card and the second SIM card satisfies the DSDA requirements, the network monitoring component 301 sends an instruction to establish a data connection to the network establishing component 302 to request the establishment of the data connection of the second SIM card.

When the resident network combination of the first SIM card and the second SIM card does not satisfy the DSDA requirements, the network monitoring component 301 sends an instruction to disconnect the data connection to the network establishing component 302 to request the disconnection of the data connection of the second SIM card.

Herein, it should be understood that, in some embodiments of the present disclosure, the first SIM card can be used as the main card of the terminal, that is, the data card, and the user usually turns on the data switch to enable the data connection of the main card. In some embodiments of the present disclosure, the second SIM card can be used as a secondary card, that is, a non-data card.

In some embodiments of the present disclosure, after receiving the instruction to establish the data connection, the network establishing component 302 does not disconnect the data connection of the main card, and at this time, the data connection of the secondary card is established, the establishment steps can refer to the entire process steps involved in the above embodiments.

It can be understood that, in some embodiments of the present disclosure, the establishment process of the data connection of the main card is completely in accordance with the entire process steps of establishing a data connection and establishing a route involved in the above embodiments, but the data connection of the secondary card is established in accordance with the steps of establishing the data connection among the entire process steps involved in the above embodiments, that is, after "the framework layer obtains network card information", the subsequent steps of establishing the route will not be executed temporarily, that is, the corresponding route is not established.

In some embodiments of the present disclosure, the network establishing component 302 monitors the notification about the change in the signal quality of the main card from the network quality monitoring component 303, and when the signal quality of the main card becomes worse, the network establishing component 302 actively switches the data connection to the secondary card, that is:
(1) disconnecting the data connection of the main card, namely, controlling the main card to cancel the steps (6) and (7) in the entire process steps of establishing the data connection and establishing the route involved in the above embodiments, that is, the process of establishing the route for the main card is canceled, without actually disconnecting the connection between the modem and the network.
(2) establishing the data connection of the secondary card, namely, controlling the secondary card to perform the steps (6) and (7) in the entire process steps of establishing the data connection and establishing the route involved in the above embodiments, that is, the route of the secondary card is established, and at this time, the mobile data takes the route of the secondary card.

In some embodiments of the present disclosure, the network establishing component 302 simultaneously monitors the specific service monitoring component 304, when a specific service is performed, the network establishing component 302 also receives a notification, and the network establishing component 302 actively switches the route to the secondary card, that is, when the calling is made through the secondary card, the route is switched to the secondary card. When the call ends, the route is switched back to the main card.

In some embodiments of the present disclosure, after receiving an instruction to disconnect the connection, the network establishing component 302 disconnects the data connection of the current secondary card through the interface of the operating system. At this time, all sub-steps in the entire process steps involved in the above embodiments are disconnected.

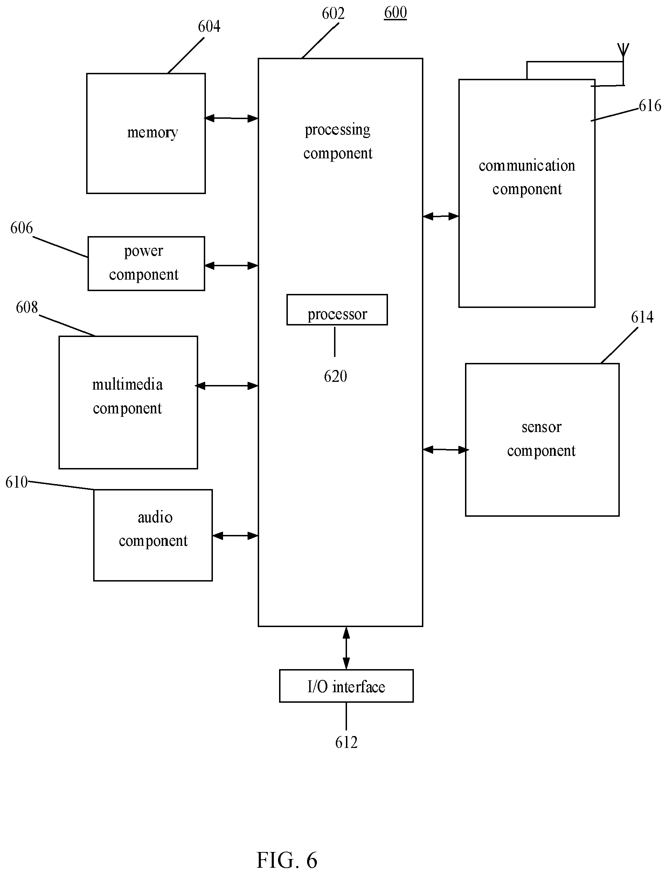

FIG. 6 is a block diagram illustrating a device 600 for switching data according to some embodiments. For example, the device 600 can be a mobile phone, a computer, a digital broadcast terminal, a messaging device, a gaming console, a tablet, a medical device, exercise equipment, a personal digital assistant, and the like.

Referring to FIG. 6, the device 600 may include one or more of the following components: a processing component 602, a memory 604, a power component 606, a multimedia component 608, an audio component 610, an input/output (I/O) interface 612, a sensor component 614, and a communication component 616.

The processing component 602 typically controls overall operations of the device 600, such as the operations associated with display, telephone calls, data communications, camera operations, and recording operations. The processing component 602 may include one or more processors 620 to execute instructions to implement all or part of the steps in the above described methods. Moreover, the processing component 602 may include one or more modules which facilitate the interaction between the processing component 602 and other components. For instance, the processing component 602 may include a multimedia module to facilitate the interaction between the multimedia component 608 and the processing component 602.

The memory 604 is configured to store various types of data to support the operation of the device 600. Examples of such data include instructions for any applications or methods operated on the device 600, contact data, phonebook data, messages, pictures, videos, etc. The memory 604 may be implemented by using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 606 supplies power to various components of the device 600. The power component 606 may include a power management system, one or more power sources, and any other components associated with the generation, management, and distribution of power in the device 600.

The multimedia component 608 includes a screen providing an output interface between the device 600 and a user. In some embodiments, the screen may include a liquid crystal display (LCD) and a touch panel (TP). In some embodiments, organic light-emitting diode (OLED) displays can be employed.

If the screen includes the touch panel, the screen can be implemented as a touch screen to receive input signals from the user. The touch panel includes one or more touch sensors to sense touches, swipes, and gestures on the touch panel. The touch sensors can not only sense a boundary of a touch or swipe action, but also sense a period of time and a pressure associated with the touch or swipe action. In some embodiments, the multimedia component 608 includes a front camera and/or a rear camera. The front camera and/or the rear camera can receive external multimedia data while the device 600 is in an operation mode, such as a photographing mode or a video mode. Each of the front camera and the rear camera may be a fixed optical lens system or have focus and optical zoom capability.

The audio component 610 is configured to output and/or input audio signals. For example, the audio component 610 includes a microphone (MIC) configured to receive an external audio signal when the device 600 is in an operation mode, such as a call mode, a recording mode, and a voice recognition mode. The received audio signal can be further stored in the memory 604 or transmitted via the communication component 616. In some embodiments, the audio component 610 further includes a speaker to output audio signals.

The I/O interface 612 provides an interface between the processing component 602 and peripheral interface modules, such as a keyboard, a click wheel, buttons, and the like. The buttons may include, but are not limited to, a home button, a volume button, a starting button, and a locking button.

The sensor component 614 includes one or more sensors to provide status assessments of various aspects of the device 600. For instance, the sensor component 614 can detect an on/off status of the device 600, relative positioning of components, e.g., the display and a keypad, of the device 600, the sensor component 614 can also detect a change in position of the device 600 or one component of the device 600, a presence or absence of user contact with the device 600, an orientation or an acceleration/deceleration of the device 600, and a change in temperature of the device 600. The sensor component 614 may include a proximity sensor configured to detect the presence of nearby objects without any physical contact. The sensor component 614 may also include a light sensor, such as a CMOS or CCD image sensor, for use in imaging applications. In some embodiments, the sensor component 614 can also include an accelerometer sensor, a gyroscope sensor, a magnetic sensor, a pressure sensor, or a temperature sensor.

The communication component 616 is configured to facilitate wired or wireless communication between the device 600 and other devices. The device 600 can access a wireless network based on a communication standard, such as Wi-Fi, 2G, 3G, 4G, or 5G, or a combination thereof. In one exemplary embodiment, the communication component 616 receives a broadcast signal or broadcast associated information from an external broadcast management system via a broadcast channel. In one exemplary embodiment, the communication component 616 further includes a near field communication (NFC) module to facilitate short-range communications. For example, the NFC module can be implemented based on a radio frequency identification (RFID) technology, an infrared data association (IrDA) technology, an ultra-wideband (UWB) technology, a Bluetooth (BT) technology, and other technologies.

In some embodiments, the device 600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In some embodiments, there is also provided a non-transitory computer-readable storage medium including instructions, such as the memory 604 including the instructions executable by the processor 620 in the device 600, for performing the above-described methods. For example, the non-transitory computer-readable storage medium can be a ROM, a random-access memory (RAM), a CD-ROM, a magnetic tape, a floppy disc, an optical data storage device, and the like.

The various the embodiments of the present disclosure can have one or more of the following advantages.

The SIM card satisfying a combination of dual standby and dual active network statuses is determined according to the network statuses of the multiple SIM cards, and a data connection for the SIM card satisfying the combination of dual standby and dual active network statuses is established according to some embodiments in the present disclosure. When the SIM card is switched, the route of the SIM card that has established a data connection is disconnected, and the route of another SIM card that has established the data connection is established, thereby there is no need to establish the data connection in the process of switching the SIM card, which saves the time of establishing the data connection, and the operation is simple and fast.

The various circuits, device components, units, blocks, or portions may have modular configurations, or are composed of discrete components, but nonetheless can be referred to as "units," "modules," or "portions" in general. In other words, the "circuits," "components," "modules," "blocks," "portions," or "units" referred to herein may or may not be in modular forms, and these phrases may be interchangeably used.

It will be understood that the "plurality" in the disclosure means two or more, and other quantifiers are similar. "And/or" describes the relationship of the related objects, indicating that there may be three relationships, for example, A and/or B may indicate three cases: A exists alone, A and B exist simultaneously, and B exists alone. The character "/" generally indicates that the relationship between the contextually relevant objects is a "or" relationship. The singular forms "a," "an," and "the" are also intended to include the plural forms unless the context clearly indicates otherwise.

It will be further understood that although the terms such as "first," "second," and the like are used to describe various information, this information should not be limited by these terms. The terms are only used to distinguish the same type of information from each other, and do not indicate a specific order or importance. In fact, the expressions such as "first," "second" and the like can be used interchangeably. For instance, first information can also be referred to as second information without departing from the scope of the disclosure, and similarly, the second information can also be referred to as the first information.

It will be further understood that although the operations in the embodiments of the present disclosure are described in a specific order in the drawings, it will not be understood as requiring that the operations are performed in the specific order shown or in a serial order, or that perform all the operations shown to acquire the desired result. In certain environments, multitasking and parallel processing may be advantageous.

Those of ordinary skill in the art will understand that the above described modules/units can each be implemented by hardware, or software, or a combination of hardware and software. Those of ordinary skill in the art will also understand that multiple ones of the above described modules/units may be combined as one module/unit, and each of the above described modules/units may be further divided into a plurality of sub-modules/subunits.

A computer program (also known as a program, software, software application, app, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a mark-up language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described in this disclosure can be performed by one or more programmable processors executing one or more computer programs to perform actions by operating on input data and generating output. The processes and logic flows can also be performed by, and apparatus can also be implemented as, special purpose logic circuitry, e.g., an FPGA, or an ASIC.

Processors or processing circuits suitable for the execution of a computer program include, by way of example, both general and special purpose microprocessors, and any one or more processors of any kind of digital computer. Generally, a processor will receive instructions and data from a read-only memory, or a random-access memory, or both. Elements of a computer can include a processor configured to perform actions in accordance with instructions and one or more memory devices for storing instructions and data.

Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few.

Devices suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, implementations of the subject matter described in this specification can be implemented with a computer and/or a display device, e.g., a VR/AR device, a head-mount display (HMD) device, a head-up display (HUD) device, smart eyewear (e.g., glasses), a CRT (cathode-ray tube), LCD (liquid-crystal display), OLED (organic light emitting diode) display, other flexible configuration, or any other monitor for displaying information to the user and a keyboard, a pointing device, e.g., a mouse, trackball, etc., or a touch screen, touch pad, etc., by which the user can provide input to the computer.

Other types of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In an example, a user can speak commands to the audio processing device, to perform various operations.

Implementations of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

While operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations, and it should be understood that the described program components and systems can generally be integrated together in a single software product or packaged into multiple software products.

Thus, particular implementations of the subject matter have been described. Other implementations are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking or parallel processing may be utilized.

It is intended that the specification and embodiments be considered as examples only. Other embodiments of the disclosure will be apparent to those skilled in the art in view of the specification and drawings of the present disclosure. That is, although specific embodiments have been described above in detail, the description is merely for purposes of illustration. It should be appreciated, therefore, that many aspects described above are not intended as required or essential elements unless explicitly stated otherwise.

Some other embodiments of the present disclosure can be available to those skilled in the art upon consideration of the specification and practice of the various embodiments disclosed herein. The present application is intended to cover any variations, uses, or adaptations of the present disclosure following general principles of the present disclosure and include the common general knowledge or conventional technical means in the art without departing from the present disclosure. The specification and examples can be shown as illustrative only, and the true scope of the disclosure is indicated by the following claims.

## Claims

1. A data switching method, applied to a terminal having multiple SIM cards for user identification, **characterized in that** the method comprises:
monitoring (S11) network statuses of the multiple SIM cards, and determining that there is a SIM card satisfying a combination of dual standby and dual active network statuses among the multiple SIM cards based on the network statuses;
establishing (S12) a data connection for the SIM card satisfying the combination of dual standby and dual active network statuses in response to the determining that there is the SIM card satisfying the combination of dual standby and dual active network statuses among the multiple SIM cards based on the network statuses; and
disconnecting (S13) a routing connection of a SIM card among the multiple SIM cards that currently establishes a routing connection, and switching to a SIM card that has established a data connection to establish a routing connection in response to a need to switch the SIM card that currently establishes the routing connection.

2. The data switching method according to claim 1, wherein the SIM cards satisfying the combination of dual standby and dual active network statuses include a first SIM card and a second SIM card, and the first SIM card is a SIM card that has established a data connection and a routing connection and performs a service, and the second SIM card is a SIM card that is different from the first SIM card and does not establish the data connection and the routing connection among the SIM cards satisfying the combination of dual standby and dual active network statuses;
the establishing (S12) the data connection for the SIM card satisfying a combination of dual standby and dual active network statuses comprises:
maintaining the data connection and the routing connection of the first SIM card, and establishing the data connection of the second SIM card.

3. The data switching method according to claim 1 or 2, further comprising:
monitoring and recording a network data signal quality level of each of the multiple SIM cards, the network data signal quality level including a strong signal quality level and a weak signal quality level;
the network data signal quality of the strong signal quality level is higher than a first predetermined value, and the network data signal quality of the weak signal quality level is lower than the first predetermined value;
wherein, if a level of the network data signal quality of the SIM card that currently establishes the routing connection is a weak signal quality level, it is determined that the SIM card that currently establishes the routing connection needs to be switched.

4. The data switching method according to any of claims 1-3, further comprising:
monitoring (S21) services performed by the second SIM card; and
determining (S22) that a current routing connection needs to be switched from the first SIM card to the second SIM card in response to monitoring that the second SIM card performs a specific service.

5. The data switching method according to any of claims 1-4, wherein the establishing (S12) the data connection for the SIM card satisfying the combination of dual standby and dual active network statuses comprises:
establishing a data connection carrying SIM card information for each of the SIM cards satisfying the combination of dual standby and dual active network statuses.

6. The data switching method according to any of claims 1-5, further comprising:
disconnecting a data connection of a SIM card that does not establish a route and has established the data connection if the network status of the SIM card that has established the data connection no longer satisfies the combination of dual standby and dual active network statuses after establishing the data connection for the SIM card satisfying the combination of dual standby and dual active network statuses.

7. A data switching apparatus, applied to a terminal on which multiple SIM cards for user identification are installed, **characterized in that** the apparatus comprises:
a network monitoring component (301) configured to monitor network statuses of the multiple SIM cards, and determine that there is a SIM card satisfying a combination of dual standby and dual active network statuses among the multiple SIM cards based on the network statuses; and
a network establishing component (302) configured to establish a data connection for the SIM card satisfying the combination of dual standby and dual active network statuses in response to determining that there is the SIM card satisfying the combination of dual standby and dual active network statuses among the multiple SIM cards based on the network statuses; and disconnect a routing connection of a SIM card that currently establishes a routing connection, and switch to a SIM card that has established a data connection to establish a routing connection in response to a need to switch the SIM card that currently establishes the routing connection.

8. The data switching apparatus according to claim 7, wherein the SIM cards satisfying the combination of dual standby and dual active network statuses include a first SIM card and a second SIM card, and the first SIM card is a SIM card that has established a data connection and a routing connection and performs a service, and the second SIM card is a SIM card that is different from the first SIM card and does not establish the data connection and the routing connection among the SIM cards satisfying the combination of dual standby and dual active network statuses; and
the network establishing component (302) is configured to maintain the data connection and the routing connection of the first SIM card, and to establish the data connection of the second SIM card.

9. The data switching apparatus according to claim 7 or 8, wherein the apparatus further comprises: a network quality monitoring component (303);
the network quality monitoring component (301) is configured to:
monitor and record a network data signal quality level of each of the multiple SIM cards, the network data signal quality level including a strong signal quality level and a weak signal quality level;
the network data signal quality of the strong signal quality level is higher than a first predetermined value, and the network data signal quality of the weak signal quality level is lower than the first predetermined value;
wherein, if a level of the network data signal quality of the SIM card that currently establishes the routing connection is a weak signal quality level, it is determined that the SIM card that currently establishes the routing connection needs to be switched.

10. The data switching apparatus according to any of claims 7-9, wherein the apparatus further comprises: a specific service monitoring component (304);
the specific service monitoring component is configured to:
monitor services performed by the second SIM card; and
determine that a current routing connection needs to be switched from the first SIM card to the second SIM card in response to monitoring that the second SIM card performs a specific service.

11. The data switching apparatus according to any of claims 7-10, wherein the network establishing component (302) is configured to:
establish a data connection carrying SIM card information for each of the SIM cards satisfying a combination of dual standby and dual active network statuses.

12. The data switching apparatus according to any of claims 7-10, wherein the network establishing component (302) is further configured to:
disconnect a data connection of a SIM card that does not establish a route and has established the data connection if the network status of the SIM card that has established the data connection no longer satisfies the combination of dual standby and dual active network statuses after the data connection is established for the SIM card satisfying the combination of dual standby and dual active network statuses.

13. A network mode adjusting device implementing the data switching method according to any of claims 1-6, comprising:
a processor; and
a storage for storing instructions executable by the processor,
wherein, the processor is configured to execute the instructions to implement the data switching method.

14. Anon-transitory computer-readable storage medium having stored therein instructions that, when executed by a processor of a network device, cause an electronic device to execute the data switching method according to any of claims 1-6;
wherein:
the SIM cards satisfying the combination of dual standby and dual active network statuses include a first SIM card and a second SIM card, and the first SIM card is a SIM card that has established a data connection and a routing connection and performs a service, and the second SIM card is a SIM card that is different from the first SIM card and does not establish the data connection and the routing connection among the SIM cards satisfying the combination of dual standby and dual active network statuses; and
the establishing the data connection for the SIM card satisfying a combination of dual standby and dual active network statuses comprises:
maintaining the data connection and the routing connection of the first SIM card, and establishing the data connection of the second SIM card.

15. A mobile terminal implementing the data switching method according to any of claims 1-6, comprising the multiple SIM cards, wherein the mobile terminal is configured to switch between the multiple SIM cards without a need to establish the data connection while switching between the SIM cards, thereby saving time of establishing the data connection.
